(19) Europäisches Patentamt
European Patent Office
Office européen des brevets

(11) Veröffentlichungsnummer: **0 089 573**
**B1**

(12) # EUROPÄISCHE PATENTSCHRIFT

(45) Veröffentlichungstag der Patentschrift: **10.04.85**

(51) Int. Cl.⁴: **C 07 F 7/08,** A 01 N 55/00

(21) Anmeldenummer: **83102400.5**

(22) Anmeldetag: **11.03.83**

(54) **Thioalkansäure-silylalkylester, Verfahren zu ihrer Herstellung und ihre Verwendung zur Bekämpfung unerwünschten Pflanzenwuchses.**

(30) Priorität: **20.03.82 DE 3210336**

(43) Veröffentlichungstag der Anmeldung: **28.09.83 Patentblatt 83/39**

(45) Bekanntmachung des Hinweises auf die Patenterteilung: **10.04.85 Patentblatt 85/15**

(84) Benannte Vertragsstaaten: **BE CH DE FR GB IT LI NL**

(56) Entgegenhaltungen: **EP-A-0 000 351**

(73) Patentinhaber: **BASF Aktiengesellschaft, Carl-Bosch-Strasse 38, D-6700 Ludwigshafen (DE)**

(72) Erfinder: **Acker, Rolf-Dieter, Dr., Tuchbleiche 8, D-6906 Leimen (DE)**
Erfinder: **Parg, Adolf, Dr., Paray-le-Monial-Strasse 8, D-6702 Bad Duerkheim (DE)**
Erfinder: **Wuerzer, Bruno, Dr., Dipl.-Landwirt, Ruedigerstrasse 13, D-6701 Otterstadt (DE)**

EP 0 089 573 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Thioalkansäuresilylalkylester, Verfahren zu ihrer Herstellung, herbizide Mittel, die diese Verbindungen als Wirkstoffe enthalten, sowie die Verwendung der Wirkstoffe bzw. der Mittel bei der Bekämpfung unerwünschten Pflanzenwuchses.

Phenoxyphenylthioalkansäurealkylester sind als Herbizide bekannt (JP-OS Nr. 77/21320).

Es wurde gefunden, dass Thioalkansäuresilylalkylester der Formel

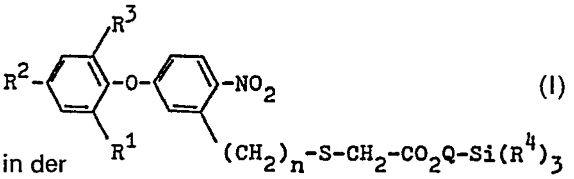

(I)

in der

$R^1$ Wasserstoff oder Halogen,

$R^2$ Halogen, Trihalogenmethyl, Trihalogenmethoxy, Trihalogenmethylmercapto,

$R^3$ Wasserstoff oder Halogen,

die Reste $R^4$ gleich oder verschieden sind und $C_1$-$C_6$-Alkyl oder Phenyl,

Q eine unverzweigte oder verzweigte $C_1$-$C_8$-Alkylenkette, und

n 0 oder 1 bedeuten,

eine beachtliche selektive herbizide Wirkung besitzen.

Trihalogenmethyl-, Trihalogenmethoxy- und Trihalogenmethylmercaptogruppen für $R^2$ in Formel I sind beispielsweise Trifluormethyl, Trifluormethoxy, Trifluormethylmercapto, $R^4$ bedeutet ausser Phenyl unverzweigtes oder verzweigtes $C_1$-$C_6$-Alkyl, vorzugsweise $C_1$-$C_4$-Alkyl, insbesondere Methyl und Ethyl. Unverzweigte oder verzweigte Alkylenketten mit insgesamt 1 bis 8 Kohlenstoffatomen für Q sind beispielsweise Methylen, Dimethylen, Trimethylen, Tetramethylen, Methylmethylen, 2-Methyltrimethylen, 2-Methyldimethylen, 1-Methyldimethylen, 3-Methyltetramethylen, 2-Ethyldimethylen, 3-Propyltrimethylen, Pentamethylen, Hexamethylen.

Bevorzugte Thioalkansäuresilylalkylester der Formel I sind solche, bei denen $R^2$ Trifluormethyl oder Trifluormethylmercapto bedeutet.

Man erhält die Thioalkansäuresilylalkylester der Formel I in an sich bekannter Weise durch Umsetzung einer Carbonsäure der Formel

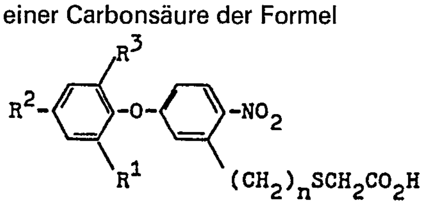

(II)

in der $R^1$, $R^2$, $R^3$ und n die obengenannten Bedeutungen haben,

oder eines Salzes einer dieser Säuren mit einem Halogenierungsmittel in das entsprechende Carbonsäurechlorid und durch Umsetzung dieses Carbonsäurechlorids gegebenenfalls in Gegenwart eines säurebindenden Mittels mit einem Silylalkanol der Formel

$$(R^4)_3-Si-Q-OH \qquad (III)$$

in der $R^4$ und Q die oben genannten Bedeutungen haben (Verfahrensvariante a) oder durch Umsetzung einer Carbonsäure der Formel II mit einem Silylalkanol der Formel III in Gegenwart eines Veresterungsmittels (Verfahrensvariante b).

Das Verfahren a wird mit ungefähr stöchiometrischen Substanzmengen, d. h. in einem Mengenverhältnis von etwa 1,0 bis 1,3 Eq Halogenierungsmittel pro 1,0 Eq der Verbindung II durchgeführt.

Zweckmässigerweise wird das Halogenierungsmittel zu der Verbindung II, gegebenenfalls gelöst in einem inerten Lösungsmittel, zugegeben und die Mischung 0,5 bis 3 h auf 50 bis 120, vorzugsweise auf 70 bis 100° C, erhitzt. Nach dem Abdestillieren der flüchtigen Anteile unter vermindertem Druck wird dann das zurückbleibende Carbonsäurechlorid in einem inerten Lösungsmittel zu einer Lösung des Silylalkanols der Formel III und einem säurebindenden Mittel in Mengen von 1 Eq des Carbonsäurechlorids zu 1,0 bis 1,3 Eq der Verbindung III und des säurebindenden Mittels portionsweise zugefügt und 1 bis 5 h bei einer Temperatur zwischen 70 und 100° C gerührt. Nach dem Abfiltrieren und Einengen der Lösung kann das Endprodukt durch Umkristallisieren oder Chromatographie gereinigt werden.

Als säurebindende Mittel kommen die üblicherweise hierzu verwendeten Basen in Betracht. Hierzu gehören vorzugsweise tertiäre Amine, Erdalkaliverbindungen, Ammoniumverbindungen und Alkaliverbindungen sowie entsprechende Gemische. Es können aber auch Zinkverbindungen verwendet werden. Beispiel für säurebindende Mittel sind:

Kaliumhydroxid, Natriumhydroxid, Kaliumcarbonat, Natriumcarbonat, Lithiumhydroxid, Lithiumcarbonat, Natriumhydrogencarbonat, Kaliumhydrogencarbonat, Calciumhydroxid, Calciumoxid, Bariumoxid, Magnesiumhydroxid, Magnesiumoxid, Bariumhydroxid, Calciumcarbonat, Magnesiumcarbonat, Magnesiumhydrogencarbonat, Magnesiumacetat, Zinkhydroxid, Zinkoxid, Zinkcarbonat, Zinkacetat, Natriumformiat, Natriumacetat, Trimethylamin, Triethylamin, Tripropylamin, Triisopropylamin, Tributylamin, Triisobutylamin, Tri-sek.-butylamin, Tri-tert.-butylamin, Tribenzylamin, Tricyclohexylamin, Triamylamin, Diisopropylethylamin, Trihexylamin, N,N-Dimethylanilin, N,N-Diethylanilin, N,N-Dipropylanilin, N,N-Dimethyltoluidin, N,N-Diethyltoluidin, N,N-Dipropyltoluidin, N,N-Dimethyl-p-aminopyridin, N,N-Diethyl-p-aminopyridin, N,N-Dipropyl-p-aminopyridin, N-Methylpyrrolidon, N-Ethylpyrrolidon, N-Methylpiperidin, N-Ethylpiperidin, N-Methylpyrrolidin, N-Ethylpyrrolidin, N-Methylimidazol, N-Ethylimidazol, N-Methylpyrrol, N-Ethylpyrrol, N-Methylmorpholin, N-Ethylmorpholin, N-Methylhexamethylenimin, N-Ethylhexamethylenimin, Pyridin, Chinolin, α-Picolin, β-Picolin, γ-Picolin, Isochinolin, Pyrimidin, Acridin, N,N,N',N'-Tetramethylethylendiamin, N,N,N',N'-Tetraethylethylendiamin, Chinoxalin, Chinazolin, N-Propyldiisopropylamin,

N,N'-Dimethylcyclohexylamin, 2,6-Lutidin, 2,4-Lutidin, Trifurylamin, Triethylendiamin.

Das Verfahren b wird mit ungefähr stöchiometrischen Substanzmengen, d. h. in einem Mengenverhältnis von etwa 0,8 bis 1,3 Eq der Verbindung II zu 1,0 Eq der Verbindung III, durchgeführt, wobei ein Veresterungsmittel, z. B. Carbonyldiimidazol, Sulfonyldiimidazol oder Cyclohexylcarbodiimid, in Mengen von 0,5 bis 2,5 Eq zugesetzt wird. Nach dem Zusammengeben der Verbindungen der Formeln II und III und dem Veresterungsmittel bei −20 bis +50° C wird 5 bis 25 h nachgerührt. Das so gewonnene Endprodukt kann dann nach dem Filtrieren und Einengen durch Umkristallisieren oder Chromatographie gereinigt werden.

Bei beiden Verfahrensvarianten verwendet man unter den Reaktionsbedingungen inerte Lösungsmittel. Es kommen z. B. in Betracht:

Aliphatische und aromatische Halogenkohlenwasserstoffe, insbesondere Chlorkohlenwasserstoffe, z. B. Tetrachlorethylen, 1,1,2,2- oder 1,1,1,2-Tetrachlorethan, Dichlorpropan, Methylenchlorid, Dichlorbutan, Chloroform, Chlornaphthalin, Dichlornaphthalin, Tetrachlorkohlenstoff, 1,1,1- oder 1,1,2-Trichlorethan, Trichlorethylen, Pentachlorethan, o-, m-, p-Difluorbenzol, 1,2-Dichlorethan, 1,1-Dichlorethan, 1,2-cis-Dichlorethylen, Chlorbenzol, Fluorbenzol, Brombenzol, Iodbenzol, o-, p- und m-Dichlorbenzol, o-, p-, m-Dibrombenzol, o-, m-, p-Chlortoluol, 1,2,4-Trichlorbenzol; Ether, z. B. Ethylpropylether, Methyltert.-butylether, n-Butylethylether, Di-n-butylether, Diisobutylether, Diisoamylether, Diisopropylether, Anisol, Phenetol, Cyclohexylmethylether, Diethylether, Ethylenglykoldimethylether, Tetrahydrofuran, Dioxan, Thioanisol, β,β'-Dichlordiethylether; Nitrokohlenwasserstoffe, wie Nitromethan, Nitroethan, Nitrobenzol, o-, m-, p-Chlornitrobenzol, o-Nitrotoluol; Nitrile wie Acetonitril, Butyronitril, Isobutyronitril, Benzonitril, m-Chlorbenzonitril; aliphatische oder cycloaliphatische Kohlenwasserstoffe, z. B. Heptan, Pinan, Nonan, o-, m-, p-Cymol, Benzinfraktionen innerhalb eines Siedepunktintervalls von 70 bis 190° C, Cyclohexan, Methylcyclohexan, Dekalin, Petrolether, Hexan, Ligroin, 2,2,4-Trimethylpentan, 2,2,3-Trimethylpentan, 2,3,3-Trimethylpentan, Octan, Ester, z. B. Ethylacetat, Acetessigester, Isobutylacetat; Amide, z. B. Formamid, Methylformamid, Dimethylformamid; Ketone, z. B. Aceton, Methylethylketon; und entsprechende Gemische. Zweckmässig verwendet man das Lösungsmittel in einer Menge von 100 bis 2000 Gew.-%, vorzugsweise von 200 bis 700 Gew.-%, bezogen auf die Ausgangsstoffe.

Beide Verfahren können kontinuierlich oder diskontinuierlich, drucklos oder unter Druck, durchgeführt werden, der Einfachheit halber wird Atmosphärendruck bevorzugt.

Die folgenden Beispiele erläutern die Herstellung der neuen Substanzen; die angegebenen Teile sind Gewichtsteile.

*Beispiel 1*

20,1 Teile 2-[5-(4-Trifluormethyl-2-chlorphenoxy)-2-nitrobenzylthio]essigsäure werden in 80 Teilen Toluol mit 6,0 Teilen Thionylchlorid 2 h unter Rückfluss zum Sieden erhitzt. Nach dem Abkühlen und Abdestillieren der flüchtigen Anteile unter vermindertem Druck wird der Rückstand in 25 Teilen Toluol aufgenommen und zu 6,1 Teilen Trimethylsilylethanol, 7,1 Teilen Triethylamin und 10 Teilen Toluol bei 25 bis 30° C portionsweise zugefügt. Man rührt 3 h bei Raumtemperatur nach, engt die Lösung ein und chromatographiert über Kieselgel mit Toluol/Aceton (70/30). Man erhält 15 Teile 2-[5-(Trifluormethyl-2-chlorphenoxy)-2-nitrobenzylthio]essigsäure-(2-trimethylsilylethyl)ester vom $n_D^{22} = 1{,}5525$ (Verbindung Nr. 11).

*Beispiel 2*

12,2 Teile 2-[5-(4-Trifluormethyl-2-chlorphenoxy)-2-nitrophenylthio]essigsäure und 30 Teile Acetonitril werden vorgelegt, 4,8 Teile Pyridin und 5,3 Teile 4-Trimethylsilyl-n-butanol werden zugegeben. Man rührt 10 min bei 0 bis 5° C nach und gibt dann portionsweise 3,6 Teile Dicyclohexylcarbodiimid zu und rührt dann bei 0° C 12 h nach. Man gibt 1,0 Teile 0,5 mol Oxalsäure in Dimethylformamid zu, lässt 30 min stehen, filtriert vom Niederschlag ab und engt das Filtrat ein. Anreiben des Öls mit Cyclohexan ergibt 8,1 Teile 2-[5-(4-Trifluormethyl-2-chlorphenoxy)-2-nitrophenylthio]essigsäure-(4-trimethylsilyl-n-butyl)ester vom Fp. 78 bis 81° C (Verbindung Nr. 7).

Entsprechend können die folgenden Thioalkansäuresilylalkylester der Formel I erhalten werden

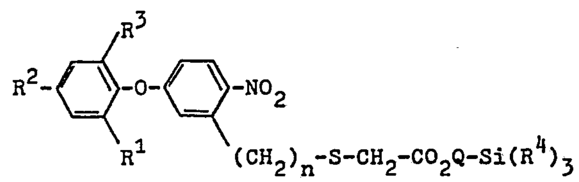

*(Tabelle auf der nächsten Seite)*

Die Verbindungen der Formel I können beispielsweise in Form von direkt versprühbaren Lösungen, Pulvern, Suspensionen, auch hochprozentigen wässerigen, öligen oder sonstigen Suspensionen oder Dispersionen, Emulsionen, Öldispersionen, Pasten, Stäubemitteln, Streumitteln, oder Granulaten durch Versprühen, Vernebeln, Verstäuben, Verstreuen oder Giessen angewendet werden. Die Anwendungsformen richten sich ganz nach den Verwendungszwecken; sie sollten in jedem Fall möglichst die feinste Verteilung der erfindungsgemässen Wirkstoffe gewährleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z. B. Benzol, Toluol, Xylol, Paraffin, Tetrahydronaphthalin, alkylierte Naphthaline oder deren Derivate, z. B. Methanol, Ethanol, Propanol, Butanol, Chloroform, Tetrachlorkohlenstoff, Cyclohexanol, Cyclohexanon, Chlorbenzol, Isophoron, stark polare Lö-

| Nr. | $R^1$ | $R^2$ | $R^3$ | $R^4$ | n | Q | Fp. (°C)/$n_D$ |
|---|---|---|---|---|---|---|---|
| 1 | Cl | $F_3C$ | H | $CH_3$ | 0 | $-CH_2-$ | 1,5587 |
| 2 | Cl | $F_3C$ | H | $CH_3$ | 0 | $-CH_2CH_2-$ | 57-58 |
| 3 | Cl | $F_3C$ | H | $CH_3$ | 0 | $-CH_2CH_2CH_2-$ | 1,5568 |
| 4 | Cl | $F_3C$ | H | $CH_3$ | 0 | $-CH_2-CH(CH_3)CH_2-$ | |
| 5 | Cl | $F_3C$ | H | $CH_3$ | 0 | $-CH_2CH(CH_3)-$ | |
| 6 | Cl | $F_3C$ | H | $CH_3$ | 0 | $-CH(CH_3)CH_2-$ | |
| 7 | Cl | $F_3C$ | H | $CH_3$ | 0 | $-CH_2CH_2CH_2CH_2-$ | 78-81 |
| 8 | Cl | $F_3C$ | H | $CH_3$ | 0 | $-CH_2CH_2CH(CH_3)CH_2-$ | |
| 9 | Cl | $F_3C$ | H | $CH_3$ | 0 | $-CH_2CH_2CH_2CH_2CH_2-$ | |
| 10 | Cl | $F_3C$ | H | $CH_3$ | 1 | $-CH_2-$ | |
| 11 | Cl | $F_3C$ | H | $CH_3$ | 1 | $-CH_2CH_2-$ | 1,5525 |
| 12 | Cl | $F_3C$ | H | $CH_3$ | 1 | $-CH_2-CH(CH_3)-$ | |
| 13 | Cl | $F_3C$ | H | $CH_3$ | 1 | $-CH_2CH_2CH_2-$ | |
| 14 | Cl | $F_3C$ | H | $CH_3$ | 1 | $-CH_2CH_2CH_2CH_2-$ | |
| 15 | Cl | $F_3C$ | H | $C_2H_5$ | 0 | $-CH_2-$ | |
| 16 | Cl | $F_3C$ | H | $C_2H_5$ | 0 | $-CH_2CH_2CH_2-$ | |
| 17 | Cl | $F_3C$ | H | $C_2H_5$ | 0 | $-CH_2CH_2CH_2CH_2-$ | |
| 18 | Cl | $F_3C$ | Cl | $CH_3$ | 0 | $-CH_2CH_2CH_2-$ | |
| 19 | Cl | $F_3C$ | Cl | $CH_3$ | 1 | $-CH_2-$ | |
| 20 | Cl | $F_3C$ | Cl | $CH_3$ | 0 | $-CH(CH_3)-$ | |
| 21 | Cl | $F_3C$ | H | $CH_3$ | 0 | $-CH(CH_3)-$ | |
| 22 | Cl | $F_3C$ | H | $C_6H_5$ | 0 | $-CH_2-$ | |
| 23 | Cl | $F_3C$ | H | $C_6H_5$ | 0 | $-CH_2CH_2-$ | |
| 24 | Cl | $F_3CS$ | H | $CH_3$ | 0 | $-CH_2-$ | |
| 25 | Cl | $F_3CS$ | H | $CH_3$ | 1 | $-CH_2CH_2-$ | |

sungsmittel, wie z. B. Dimethylformamid, Dimethylsulfoxid, N-Methylpyrrolidon, Wasser, in Betracht.

Wässerige Anwendungsformen können aus Emulsionskonzentraten, Pasten oder netzbaren Pulvern (Spritzpulvern, Öldispersionen) durch Zusatz von Wasser bereitet werden. Zur Herstellung von Emulsionen, Pasten oder Öldispersionen können die Substanzen als solche, oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphtalinsulfonsäure, Phenolsulfonsäure, Alkylarylsulfonate, Alkylsulfate, Alkylsulfonate, Alkali- und Erdalkalisalze der Dibutylnaphthalinsulfonsäure, Kaurylethersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctylphenol, Octylphenol, Nonylphenol, Alkylphenolpolyglykolether, Tributylphenylpolyglykolether, Alkylarylpolyetheralkohole, Isotridecylalkohol, Fettalkoholethylenoxidkondensate, ethoxyliertes Rizinusöl, Polyoxyethylenalkylether, ethoxyliertes Polyoxypropylen, Laurylalkoholpolyglykoletheracetal, Sorbitester, Lignin, Sulfitablaugen und Methylcellulose in Betracht.

Pulver-, Streu- und Stäubemittel können durch Mischen oder gemeinsames Vermahlen der wirksamen Substanzen mit einem festen Trägerstoff hergestellt werden.

Granulate, z. B. Umhüllungs-, Imprägnierungs- und Homogengranulate, können durch Bindung der Wirkstoffe an festen Trägerstoffen hergestellt werden. Feste Trägerstoffe sind Mineralerden wie Silicagel, Kieselsäuren, Kieselgele, Silikate, Talkum, Kaolin, Attaclay, Kalkstein, Kalk, Kreide, Bolus, Löss, Ton, Dolomit, Diatomeenerde, Calcium- und Magnesiumsulfat, Magnesiumoxid, gemahlene Kunststoffe, Düngemittel, wie z. B. Ammoniumsulfat, Ammoniumphosphat, Ammoniumnitrat, Harnstoffe und pflanzliche Produkte, wie Getreidemehl, Baumrinden-, Holz- und Nussschalenmehl, Cellulosepulver und andere feste Trägerstoffe.

Die Formulierungen enthalten zwischen 0,1 und 95 Gew.-%, vorzugsweise zwischen 0,5 und 90 Gew.-% Wirkstoff.

Beispiele für Formulierungen sind:

I. Man vermischt 90 Gew.-Teile der Verbindung Nr. 1 mit 10 Gew.-Teile N-Methyl-α-pyrrolidon und erhält eine Lösung, die zur Anwendung in Form kleinster Tropfen geeignet ist.

II. 20 Gew.-Teile der Verbindung Nr. 2 werden in einer Mischung gelöst, die aus 80 Gew.-Teile Xylol, 10 Gew.-Teile des Anlagerungsproduktes von 8 bis 10 mol Ethylenoxid an 1 mol Ölsäure-N-monoethanolamid, 5 Gew.-Teilen Calciumsalz der Dodecylbenzolsulfonsäure und 5 Gew.-Teilen des

Anlagerungsproduktes von 40 mol Ethylenoxid an 1 mol Ricinusöl besteht. Durch Ausgiessen und feines Verteilen der Lösung in 100000 Gew.-Teilen Wasser enhält man eine wässerige Dispersion, die 0,02 Gew.-% des Wirkstoffs enthält.

III. 20 Gew.-Teile der Verbindung Nr. 3 werden in einer Mischung gelöst, die aus 40 Gew.-Teilen Cyclohexanon, 30 Gew.-Teilen Isobutanol, 20 Gew.-Teilen des Anlagerungsproduktes von 7 mol Ethylenoxid an 1 mol Isooctylphenol und 10 Gew.-Teile des Anlagerungsproduktes von 40 mol Ethylenoxid an 1 mol Ricinusöl besteht. Durch Eingiessen und feines Verteilen der Lösung in 100000 Gew.-Teilen Wasser erhält man eine wässerige Dispersion, die 0,02 Gew.-% des Wirkstoff enthält.

IV. 20 Gew.-Teile der Verbindung Nr. 7 werden in einer Mischung gelöst, die aus 25 Gew.-Teilen Cyclohexanol, 65 Gew.-Teilen einer Mineralölfraktion vom Siedepunkt 210 bis 180° C und 10 Gew.-Teilen des Anlagerungsproduktes von 40 mol Ethylenoxid an 1 mol Ricinusöl besteht. Durch Eingiessen und feines Verteilen der Lösung in 100000 Gew.-Teilen Wasser erhält man eine wässerige Dispersion, die 0,02 Gew.-% des Wirkstoffs enthält.

V. 20 Gew.-Teile der Verbindung Nr. 1 werden mit 3 Gew.-Teilen des Natriumsalzes der Diisobutylnaphthalinsulfonsäure, 17 Gew.-Teilen des Natriumsalzes einer Ligninsulfonsäure aus einer Sulfitablauge und 60 Gew.-Teilen pulverförmigen Kieselsäuregel gut vermischt und in einer Hammermühle vermahlen. Durch feines Verteilen der Mischung in 20000 Gew.-Teilen Wasser erhält man eine Spritzbrühe, die 0,1 Gew.-% des Wirkstoffs enthält.

VI. 3 Gew.-Teile der Verbindung Nr. 11 werden mit 97 Gew.-Teilen feinteiligem Kaolin vermischt. Man erhält auf diese Weise ein Stäubemittel, das 3 Gew.-% des Wirkstoffs enthält.

VII. 30 Gew.-Teile der Verbindung Nr. 2 werden mit einer Mischung aus 92 Gew.-Teilen pulverförmigem Kieselsäuregel und 8 Gew.-Teilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

VIII. 20 Teile der Verbindung Nr. 3 werden mit 2 Teilen Calciumsalz der Dodecylbenzolsulfonsäure, 8 Teilen Fettalkoholpolyglykolether, 2 Teilen Natriumsalz eines Phenol-Harnstoff-Formaldehyd-Kondensates und 68 Teilen eines paraffinischen Mineralöls innig vermischt. Man erhält eine stabile ölige Dispersion.

Die Applikation der Wirkstoffe bzw. der Mittel kann im Vorauflaufverfahren oder im Nachauflaufverfahren erfolgen. Vorzugsweise werden die neuen Wirkstoffe nach dem Auflaufen der unerwünschten Pflanzen ausgebracht. Sind die Wirkstoffe für die Kulturpflanzen weniger verträglich, so können auch Ausbringungstechniken angewandt werden, bei welchen die herbiziden Mittel mit Hilfe der Spritzgeräte so gespritzt werden, dass die Blätter der empfindlichen Kulturpflanzen nach Möglichkeit nicht getroffen werden, während die Wirkstoffe auf die Blätter darunter wachsender unerwünschter Pflanzen oder die unbedeckte Bodenfläche gelangen *(post-directed, lay-by)*.

Die Aufwandmengen an Wirkstoff betragen je nach Jahreszeit, Bekämpfungsziel und Wachstumsstadium 0,005 bis 5 kg/ha und mehr, vorzugsweise 0,003 bis 3,0 kg/ha.

Die herbizide Wirkung von Thioalkansäuresilylalkylester der Formel I wird durch Gewächshausversuche gezeigt:

Als Kulturgefässe dienen Plastikblumentöpfe mit 300 $cm^3$ Inhalt und lehmigem Sand mit etwa 1,5% Humus als Substrat. Die Samen der Testpflanzen werden nach Arten getrennt flach eingesät. Unmittelbar danach werden die Wirkstoffe bei Vorauflaufbehandlung auf die Erdoberfläche aufgebracht. Sie werden hierbei in Wasser als Verteilungsmittel emulgiert und mittels fein verteilender Düsen gespritzt. Bei dieser Applikationsmethode beträgt die Aufwandmenge 3,0 kg Wirkstoff/ha. Nach dem Aufbringen der Mittel werden die Gefässe leicht beregnet, um Keimung und Wachstum in Gang zu bringen. Danach deckt man die Gefässe mit durchsichtigen Plastikhauben ab, bis die Pflanzen angewachsen sind. Diese Abdeckung bewirkt ein gleichmässiges Keimen der Testpflanzen, sofern dies nicht durch die Wirkstoffe beeinträchtigt wird.

Zum Zwecke der Nachauflaufbehandlung zieht man die Testpflanzen je nach Wuchsform erst bis zu einer Wuchshöhe von 3 bis 15 cm an und behandelt sie danach. Die für die Nachauflaufanwendung benutzten Sojapflanzen werden in einem mit Torfmull *(peat)* angereicherten Substrat angezogen, um ein günstigeres Wachstum zu gewährleisten als es in lehmigem Sandboden möglich ist. Ebenso zieht man die Reispflanzen in einem mit Torfmull angereicherten Substrat an. Eine Beeinträchtigung der Ergebnisse ist nicht zu befürchten, da die an dieser Kulturpflanze durchgeführten Behandlungen Blattbehandlungen (Nachauflaufanwendungen) sind. Zur Nachauflaufbehandlung werden entweder direkt gesäte und in den gleichen Gefässen aufgewachsene Pflanzen ausgewählt, oder sie werden erst als Keimpflanzen getrennt angezogen und einige Tage vor der Behandlung in die Versuchsgefässe verpflanzt. Die Aufwandmengen für die Nachauflaufbehandlung variieren je nach Wirkstoff zwischen 0,03 und 0,125 kg Wirstoff/ha. Eine Abdekkung unterbleibt bei der Nachauflaufbehandlung.

Die Versuchsgefässe werden im Gewächshaus aufgestellt, wobei für wärmeliebende Arten wärmere Bereiche (20 bis 35° C) und für solche gemässigter Klimate 10 bis 25° C bevorzugt werden. Die Versuchsperiode erstreckt sich über 2 bis 4 Wochen. Während dieser Zeit werden die Pflanzen gepflegt, und ihre Reaktion auf die einzelnen Behandlungen wird ausgewertet. Bewertet wird nach einer Skala von 0 bis 100. Dabei bedeutet 100 kein Aufgang der Pflanzen bzw. völlige Zerstörung zumindest der oberirdischen Teile.

Die Testpflanzen setzen sich aus folgenden Arten zusammen:

*Amaranthus spp.* (zurückgekrümmter Fuchsschwanz), *Arachys hypogaea* (Erdnüsse), *Chenopodium album* (Weisser Gänsefuss), *Datura stramonium* (Gemeiner Stechapfel), *Euphorbia geniculata* (südamerikanische Wolfsmilchart), *Glycine max* (Soja), *Lamium purpureum* (Rote Taubnessel), *Oryza sativa* (Reis), *Sinapis alba* (Weisser Senf), *Solanum nigrum* (Schwarzer Nachtschatten), *Triticum aestivum* (Weizen), *Veronica spp.* (Ehrenpreisarten).

Vergleichsmittel ist der bekannte herbizide Wirkstoff 5-(4-Trifluormethyl-2-chlorphenoxy)-2-nitrophenylthioessigsäureethylester A (JP-OS Nr. 77/21320).

Bei der Prüfung auf herbizide Wirkung bei Vorauflaufanwendung bei Aufwandmengen von 0,3 kg Wirkstoff/ha zeigen beispielsweise die Verbindungen Nrn. 1, 2, 3 und 7 eine sehr gute herbizide Aktivität gegen breitblättrige Beispielspflanzen.

Bei der Prüfung auf selektive herbizide Eigenschaften bei Nachauflaufanwendung bekämpfen beispielsweise die Verbindungen Nrn. 1, 2 und 11 mit 0,03, 0,125 bzw. 0,006 kg Wirkstoff/ha eine Reihe breitblättriger Unkräuter sehr gut. Die Verträglichkeit der Verbindungen der Formel I an den Kulturpflanzen Reis und Weizen ist dabei deutlich besser als die des Vergleichmittels A. Die Verbindung Nr. 2 führt mit 0,03 kg Wirkstoff/ha zu sehr geringen Blattschäden bei Soja.

In Anbetracht der Vielseitigkeit der Applikationsmethoden können die erfindungsgemässen Verbindungen noch in einer weiteren Zahl von Kulturpflanzen zur Beseitigung unerwünschten Pflanzenwuchses eingesetzt werden.

In Betracht kommen beispielsweise folgende Kulturen:

| Botanischer Name | Deutscher Name |
|---|---|
| *Ananas comosus* | Ananas |
| *Arachis hypogaea* | Erdnuss |
| *Asparagus officinalis* | Spargel |
| *Beta vulgaris spp. altissima* | Zuckerrübe |
| *Beta vulgaris spp. rapa* | Futterrübe |
| *Beta vulgaris spp. esculenta* | Rote Rübe |
| *Brassica napus* var. *napobrassica* | Kohlrübe |
| *Brassica napus* var. *rapa* | Weisse Rübe |
| *Camellia sinensis* | Teestrauch |
| *Carthamus tinctorius* | Saflor – Färberdistel |
| *Carya illinoinensis* | Pekannussbaum |
| *Citrus limon* | Zitrone |
| *Citrus maxima* | Pampelmuse |
| *Citrus reticulata* | Mandarine |
| *Citrus sinensis* | Apfelsine, Orange |
| *Coffea arabica (Coffea canephora, Coffea liberica)* | Kaffee |
| *Cucumis melo* | Melone |
| *Cucumis sativus* | Gurke |
| *Cynodon dactylon* | Bermudagras |
| *Elaeis guineensis* | Ölpalme |
| *Fragaria vesca* | Erdbeere |
| *Glycine max* | Sojabohne |
| *Gossypium hirsutum (Gossypium arboreum, Gossypium herbaceum, Gossypium vitifolium)* | Baumwolle |
| *Helianthus annuus* | Sonnenblume |
| *Helianthus tuberosus* | Topinambur |
| *Hevea brasiliensis* | Parakautschukbaum |
| *Hordeum vulgare* | Gerste |
| *Humulus lupulus* | Hopfen |
| *Ipomoea batatas* | Süsskartoffeln |
| *Juglans regia* | Walnussbaum |
| *Lens culinaris* | Linse |
| *Linum usitatissimum* | Faserlein |
| *Lycopersicon lycopersicum* | Tomate |
| *Malus spp.* | Apfel |
| *Manihot esculenta* | Maniok |
| *Medicago sativa* | Luzerne |
| *Mentha piperita* | Pfefferminze |
| *Musa spp.* | Obst- u. Mehlbanane |
| *Nicotiana tabacum (N. rustica)* | Tabak |

| Botanischer Name | Deutscher Name |
|---|---|
| *Olea europea* | Ölbaum |
| *Oryza sativa* | Reis |
| *Phaseolus lunatus* | Mondbohne |
| *Phaseolus mungo* | Erdbohne |
| *Phaseolus vulgaris* | Buschbohnen |
| *Pennisetum glaucum* | Perl- oder Rohrkolbenhirse |
| *Petroselinum crispum spp. tuberosum* | Wurzelpetersilie |
| *Picea abies* | Rotfichte |
| *Abies alba* | Weisstanne |
| *Pinus spp.* | Kiefer |
| *Pisum sativum* | Gartenerbse |
| *Prunus avium* | Süsskirsche |
| *Prunus domestica* | Pflaume |
| *Prunus dulcis* | Mandelbaum |
| *Prunus persica* | Pfirsich |
| *Pyrus communis* | Birne |
| *Ribes sylvestre* | Rote Johannisbeere |
| *Ribes uva-crispa* | Stachelbeere |
| *Ricinus communis* | Rizinus |
| *Saccharum officinarum* | Zuckerrohr |
| *Secale cereale* | Roggen |
| *Sesamum indicum* | Sesam |
| *Solanum tuberosum* | Kartoffel |
| *Theobroma cacao* | Kakaobaum |
| *Trifolium pratense* | Rotklee |
| *Triticum aestivum* | Weizen |
| *Vaccinium carymbosum* | Kulturheidelbeere |
| *Vaccinium vitis-idaea* | Preiselbeere |
| *Vicia faba* | Pferdebohnen |
| *Vigna sinensis (V. unguiculata)* | Kuhbohne |
| *Vitis vinifera* | Weinrebe |
| *Zea mays* (post-directed) | Mais |

Zur Verbreiterung des Wirkungsspektrums und zur Erzielung synergistischer Effekte können die neuen erfindungsgemässen Verbindungen mit zahlreichen Vertretern anderer herbizider oder wachstumsregulierender Wirkstoffgruppen gemischt und gemeinsam ausgebracht werden. Beispielsweise kommen als Mischungspartner Diazine, 4H-3,1-Benzoxazinderivate, Benzothiadiazinone, 2,6-Dinitroaniline, N-Phenylcarbamate, Thiolcarbamate, Halogencarbonsäuren, Triazine, Amide, Harnstoffe, Diphenylether, Triatinone, Uracile, Benzofuranderivate, Cyclohexan-1,3-dioderivate und andere in Betracht.

Ausserdem ist es nützlich, die neuen Verbindungen allein oder in Kombination mit anderen Herbiziden auch noch mit weiteren Pflanzenschutzmitteln gemischt gemeinsam auszubringen, beispielsweise mit Mitteln zur Bekämpfung von Schädlingen oder phytopathogenen Pilzen bzw. Bakterien. Von Interesse ist ferner die Mischbarkeit mit Mineralsalzlösungen, welche zur Behebung von Ernährungs- oder Spurenelementmängeln eingesetzt werden. Es können auch nichtphytotoxische Öle und Ölkonzentrate zugesetzt werden.

**Patentansprüche**

1. Thioalkansäuresilylalkylester der Formel

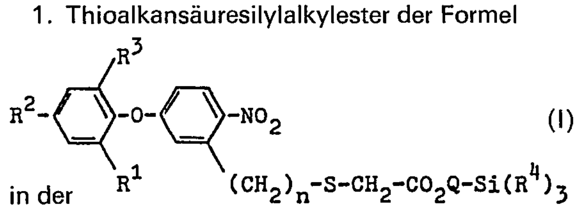

(I)

in der

$R^1$ Wasserstoff oder Halogen,

$R^2$ Halogen, Trihalogenmethyl, Trihalogenmethoxy, Trihalogenmethylmercapto,

$R^3$ Wasserstoff oder Halogen,

die Reste $R^4$ gleich oder verschieden sind und $C_1$-$C_6$-Alkyl oder Phenyl,

Q eine unverzweigte oder verzweigte $C_1$-$C_8$-Alkylenkette, und

n 0 oder 1 bedeuten.

2. Thioalkansäuresilylalkylester der Formel (I) gemäss Anspruch 1, dadurch gekennzeichnet, dass $R^2$ Trifluormethyl bedeutet.

3. 2-[5-(4-Trifluormethyl-2-chlorphenoxy)-2-nitrophenylthio]essigsäuretrimethylsilylmethylester.

4. 2-[5-(4-Trifluormethyl-2-chlorphenoxy)-2-nitrophenylthio]essigsäure-(2-trimethylsilylethyl)ester.

5. Verfahren zur Herstellung von Thioalkansäuresilylalkylestern der Formel (I) gemäss Anspruch 1, dadurch gekennzeichnet, dass man in an sich bekannter Weise

a) eine Carbonsäure der Formel

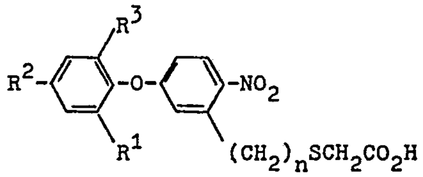

(II)

in der $R^1$, $R^2$, $R^3$ und n die im Anspruch 1 genannten Bedeutungen haben, oder Salze dieser Säuren mit einem Halogenierungsmittel in das entsprechende Carbonsäurechlorid und dieses gegebenenfalls in Gegenwart eines säurebindenden Mittels mit einem Silylalkanol der Formel

$$(R^4)_3-Si-Q-OH \qquad (III)$$

in der die Reste $R^4$ und Q die im Anspruch 1 genannten Bedeutungen haben,

umsetzt, oder

b) eine Carbonsäure der Formel (II) mit einem Silylalkanol der Formel (III) in Gegenwart eines Veresterungsmittels umsetzt.

6. Herbizid, enthaltend einen Thioalkansäuresilylalkylester der Formel (I) gemäss Anspruch 1.

7. Herbizid nach Anspruch 6, dadurch gekennzeichnet, dass es einen Thioalkansäuresilylalkylester der Formel (I) enthält, wobei $R^2$ Trifluormethyl bedeutet.

8. Herbizid, enthaltend inerte Zusatzstoffe und einen Thioalkansäuresilylalkylester der Formel (I) gemäss Anspruch 1.

9. Verfahren zur Bekämpfung unerwünschten Pflanzenwuchses, dadurch gekennzeichnet, dass man eine herbizid wirksame Menge eines Thioalkansäuresilylalkylesters der Formel (I) gemäss Anspruch 1 auf die Pflanzen und/oder ihren Standort einwirken lässt.

## Claims

1. A silylalkyl thioalkanoate of the formula

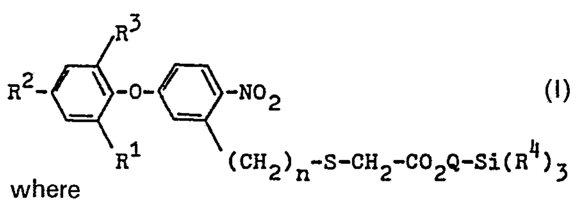

(I)

where

$R^1$ is hydrogen or halogen,

$R^2$ is halogen, trihalomethyl, trihalomethoxy or trihalomethylmercapto,

$R^3$ is hydrogen or halogen,

the radicals $R^4$ are identical or different and are each $C_1$-$C_6$-alkyl or phenyl,

Q is straight-chained or branched $C_1$-$C_8$-alkylene, and

n is 0 or 1.

2. A silylalkyl thioalkanoate of the Formula (I) as claimed in Claim 1, where $R^2$ is trifluoromethyl.

3. Trimethylsilylmethyl 2-[5-(4-trifluoromethyl-2-chlorophenoxy)-2-nitrophenylthio]acetate.

4. (2-Trimethylsilylethyl) 2-[5-(4-trifluoromethyl-2-chlorophenoxy)-2-nitrophenylthio]-acetate.

5. A process for preparing a silylalkyl thioalkanoate of the Formula (I) as claimed in Claim 1, wherein

(*a*) a carboxylic acid of the formula

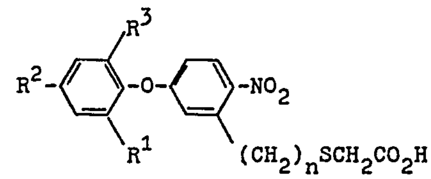

(II)

where $R^1$, $R^2$, $R^3$ and n have the meanings given in Claim 1,

or a salt of this acid, is reacted with a halogenating agent to give the corresponding acyl chloride, and then this chloride is reacted, in the presence or absence of an acid acceptor, with a silylalkanol of the formula

$$(R^4)_3-Si-Q-OH \qquad (III)$$

where $R^4$ and Q have the meanings given in Claim 1, or

(*b*) a carboxylic acid of the Formula (II) is reacted with a silylalkanol of the Formula (III) in the presence of an esterifying agent,

the reactions being carried out in a conventional manner.

6. A herbicide containing a silylalkyl thioalkanoate of the Formula (I) as claimed in Claim 1.

7. A herbicide as claimed in Claim 6, containing a silylalkyl thioalkanoate of the Formula (I), where $R^2$ is trifluoromethyl.

8. A herbicide containing inert additives and silylalkyl thioalkanoate of the Formula (I) as claimed in Claim 1.

9. A process for combating the growth of unwanted plants, wherein a herbicidally effective amount of a silylalkyl thioalkanoate of the Formula (I) as claimed in Claim 1 is allowed to act on the plants and/or their location.

## Revendications

1. Silylalkylester d'acide thioalcanique de formule

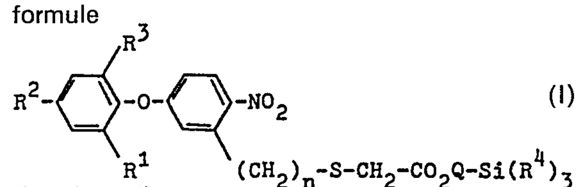

(I)

dans laquelle

$R^1$ représente hydrogène ou halogène,

$R^2$ halogène, trihalogénométhyle, trihalogénométhoxy, trihalogénométhylmercapto,

$R^3$ hydrogène ou halogène,

les restes $R^4$ sont identiques ou différents et représentent alkyle en $C_1$-$C_6$ ou phényle

Q représente une chaîne en $C_1$-$C_8$ ramifiée ou non ramifiée, et

n représente 0 ou 1.

2. Silylalkylester d'acide thioalcanique de formule (I), selon la revendication 1, caractérisé par le fait que $R^2$ représente trifluorométhyle.

3. Triméthylsilylméthylester d'acide 2-[5-(4-trifluorométhyl-2-chlorophénoxy)-2-nitrophénylthio]acétique.

4. (2-Triméthylsilyléthyl)ester d'acide 2-[5-(4-trifluorométhyl-2-chlorophénoxy)-2-nitrophénylthio]acétique.

5. Procédé de préparation de silylalkylester d'acide thioalcanique de formule (I) selon la revendication 1, caractérisé par le fait que, de manière connue en soi

a) on transforme un acide carboxylique de formule

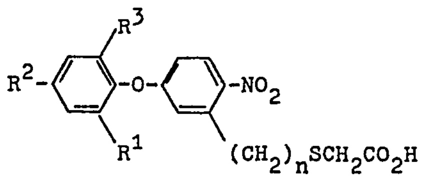

(II)

dans laquelle $R^1$, $R^2$ et $R^3$ et n ont les significations indiquées dans la revendication 1, ou des sels de cet acide, avec un agent d'halogénation, en le chlorure d'acide carboxylique correspondant et on fait réagir celui-ci, éventuellement en présence d'un agent liant les acides, avec un silylalcanol de formule

$$(R^4)_3-Si-Q-OH \qquad (III)$$

dans laquelle les restes $R^4$ et Q ont les significations indiquées dans la revendication 1 ou

b) on fait réagir un acide carboxylique de formule (II) avec un silylalcanol de formule (III), en présence d'un agent d'estérification.

6. Herbicide, contenant un silylalkylester d'acide thioalcanique de formule (I) selon la revendication 1.

7. Herbicide selon la revendication 6, caractérisé par le fait qu'il contient un silylalkylester d'acide thioalcanique de formule (I), où $R^2$ représente trifluorométhyle.

8. Herbicide, contenant des additifs inertes et un silylalkylester d'acide thioalcanique de formule (I), selon la revendication 1.

9. Procédé de lutte contre la croissance des plantes indésirables, caractérisé par le fait que l'on fait agir une quantité efficace au point de vue herbicide d'un silylalkylester d'acide thioalcanique de formule (I), selon la revendication 1, sur les plantes et/ou leur biotope.